# EUROPEAN PATENT SPECIFICATION

(11) **EP 1 315 341 B1**
(45) Date of publication and mention of the grant of the patent: **24.01.2007**
(21) Application number: 02025824.0
(22) Date of filing: 18.11.2002
(51) Int. Cl.: H04L 12/56

(54) **Receiver polling for data transmission with sliding window data flow control**
Empfängerabfrage für eine Datenübertragung mit Gleitfenster-Datenflusssteuerung
Interrogation de recepteur pour transmission de données avec commande de flux de données par fenêtre glissante

(30) Priority: 24.11.2001 KR 2001073642
(43) Date of publication of application: 28.05.2003
(73) Proprietor: LG ELECTRONICS INC., Seoul (KR)
(72) Inventor: YI, Seung-June, Seoul (KR); Yeo, Woon-Young, Anyang, Kyungki-do (KR); Lee, So-Young, Kyungki-Do (KR)
(74) Representative: Urner, Peter

(56) References cited:
- EP-A- 0 430 571
- EP-A- 0 695 053
- WO-A-01/22645
- WO-A-01/37473
- ETSI: "Universal Mobile Telecommunication System (UMTS);RLC Protocol Specification (3G TS 25.322 version 3.1.2 Release 1999)" ETSI TS 125 322 V3.1.2, XX, XX, 1999, pages 1-48, XP002168713

## Description

### BACKGROUND OF THE INVENTION

### 1. Field of the Invention

This invention relates to a method and terminal for transmitting signals in a communications system as well as to a method of manufacturing a transmitter for use in a communications system.

### 2. Background of the Related Art

A universal mobile telecommunications system (UMTS) is a third generation mobile communication system that has evolved from a standard known as Global System for Mobile communications (GSM). This standard is a European standard which aims to provide an improved mobile communication service based on a GSM core network and wideband code division multiple access (W-CDMA) technology. In December, 1998, the ETSI of Europe, the ARIB/TTC of Japan, the T1 of the United States, and the TTA of Korea formed a Third Generation Partnership Project (3GPP) for the purpose of creating the specification for standardizing the UMTS.

The work towards standardizing the UMTS performed by the 3GPP has resulted in the formation of five technical specification groups (TSG), each of which is directed to forming network elements having independent operations. More specifically, each TSG develops, approves, and manages a standard specification in a related region. Among them, a radio access network (RAN) group (TSG-RAN) develops a specification for the function, items desired, and interface of a UNITS terrestrial radio access network (UTRAN), which is a new RAN for supporting a W-CDMA access technology in the UMTS.

The TSG-RAN group includes a plenary group and four working groups. Working group 1 (WG1) develops a specification for a physical layer (a first layer). Working group 2 (WG2) specifies the functions of a data link layer (a second layer) and a network layer (a third layer). Working group 3 (WG3) defines a specification for an interface among a base station in the UTRAN, a radio network controller (RNC), and a core network. And, Working group 4 (WG4) discusses terms desired for a radio link performance and items desired for radio resource management.

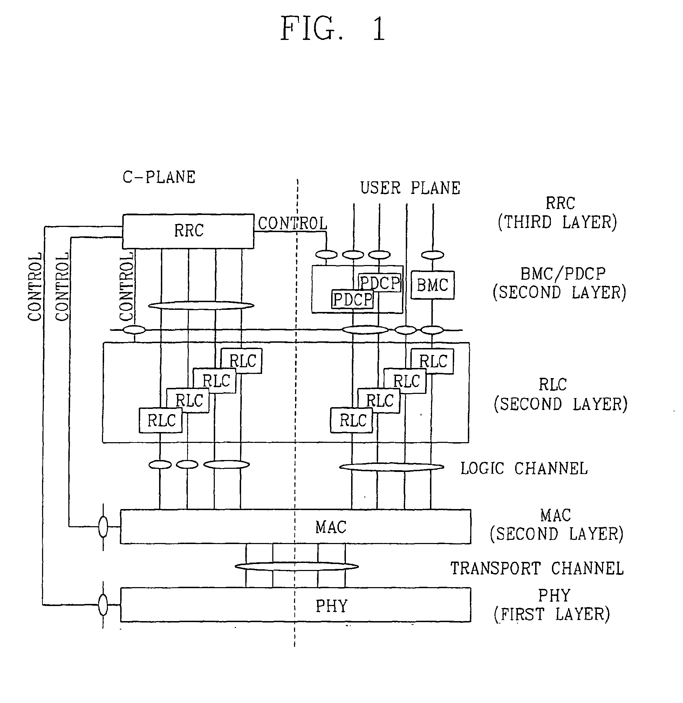

Figure 1 shows the structure of a radio access interface protocol used between a terminal operating based on a 3GPP RAN specification and a UTRAN. When viewed horizontally, the radio access interface protocol includes a physical layer (PHY), a data link layer, and a network layer; and when viewed vertically the protocol is divided into a control plane (C-plane) for transmitting a control signal and a user plane for transmitting data information. The user plane is a region to which traffic information of a user such as voice or an IP packet is transmitted. The control plane is a region to which control information such as an interface of a network or maintenance and management of a call is transmitted.

The protocol layers may be divided into a first layer (L1), a second layer (L2), and a third layer (L3) based on three lower layers of an open system interconnection (OSI) standard model well known in a communication system.

The first layer (L1) operates as a physical layer (PHY) for a radio interface, and according to related technology is connected to an upper medium access control (MAC) layer through one or more transport channels. The physical layer transmits data delivered to the physical layer (PHY) through a transport channel to a -receiver using various coding and modulating methods suitable for radio circumstances. The transport channel between the physical layer (PHY) and the MAC layer is divided into a dedicated transport channel and a common transport channel based on whether it is exclusively used by a single terminal or shared by several terminals.

The second layer L2 operates as a data link layer and lets various terminals share the radio resources of a W-CDMA network. The second layer L2 is divided into the MAC layer, a radio link control (RLC) layer, a packet data convergence protocol (PDCP) layer, and a broadcast/multicast control (BMC) layer

The MAC layer delivers data through an appropriate mapping relationship between a logical channel and a transport channel. The logical channels connect an upper layer to the MAC layer. Various logical channels are provided according to the kind of transmitted information. In general, when information of the control plane is transmitted, a control channel is used. When information of the user plane is transmitted, a traffic channel is used. The MAC layer is divided three sub-layers according to performed functions. The three sub-layers are a MAC-d sub-layer that is positioned in the SRNC and manages the dedicated transport channel, a MAC-c/sh sub-layer that is positioned in the CRNC and manages the common transport channel, and a MAC-hs sub-layer that is positioned in the Node B and manages the HS-DSCH transmission.

The RLC layer forms an appropriate RLC protocol data unit (PDU) suitable for transmission by the segmentation and concatenation functions of an RLC service data unit (SDU) received from an upper layer. The RLC layer also performs an automatic repeat request (ARQ) function by which an RLC PDU lost during transmission is re-transmitted. The RLC layer operates in three modes, a transparent mode (TM), an unacknowledged mode (UM), and an acknowledged mode (AM). The mode selected depends upon the method used to process the RLC SDU received from the upper layer. An RLC buffer stores the RLC SDUs or the RLC PDUs received from the upper layer exists in the RLC layer.

The packet data convergence protocol (PDCP) layer is an upper layer of the RLC layer which allows data items to be transmitted through a network protocol such as the IP.v4 or the IP.v6. A header compression technique for compressing and transmitting the header information in a packet can be used for effective transmission of the IP packet.

The broadcast/multicast control (BMC) layer allows a message to be transmitted from a cell broadcast center (CBC) through the radio interface. The main function of the BMC layer is scheduling and transmitting a cell broadcast message to a terminal. In general, data is transmitted through the RLC layer operating in the unacknowledged mode.

The PDCP layer and the BMC layer are located only in the user plane because they transmit only user data. Unlike the PDCP layer and the BMC layer, the RLC layer can be included in the user plane and the control plane according to the upper layer connected. When the RLC layer belongs to the control plane, data is received from a radio resource control (RRC) layer. In the other cases, the RLC layer belongs to the user plane. In general, the transmission service of user data provided to the upper layer by the second layer (L2) in the user plane is referred to as a radio bearer (RB). The transmission service of control information provided to the upper layer by the second layer (L2) in the control plane is referred to as a signaling radio bearer (SRB). As shown in Figure 1, a plurality of entities can exist in the RLC and PDCP layers. This is because a terminal has a plurality of RBs, and one or two RLC entities and only one PDCP entity are generally used for one RB. The entities of the RLC layer and the PDCP layer can perform an independent function in each layer.

The RRC layer positioned in the lowest portion of the third layer (L3) is defined only in the control plane and controls the logical channels, the transport channels, and the physical channels in relation to the setup, the reconfiguration, and the release of the RBs. At this time, setting up the RB means processes of stipulating the characteristics of a protocol layer and a channel, which are required for providing a specific service, and setting the respective detailed parameters and operation methods. It is possible to transmit control messages received from the upper layer through a RRC message.

The RLC layer will now be described in more detail. As previously indicated, the RLC layer operates in three modes: TM, UM, and AM. The AM mode will now be described, as it is preferable for use with the present invention.

One of the most significant characteristics of AM mode operation is its ability to support the re-transmission of a PDU when the PDU is not successfully transmitted or received. More specifically, when the transmitter RLC layer transmits a PDU, the receiver determines whether each PDU is received and then generates status information indicating the result. The receiver then sends status information back to inform the transmitter as to whether the PDU was received. When the transmitter receives status information from the receiver indicating that the PDU was not received, the PDU is re-transmitted to the receiver.

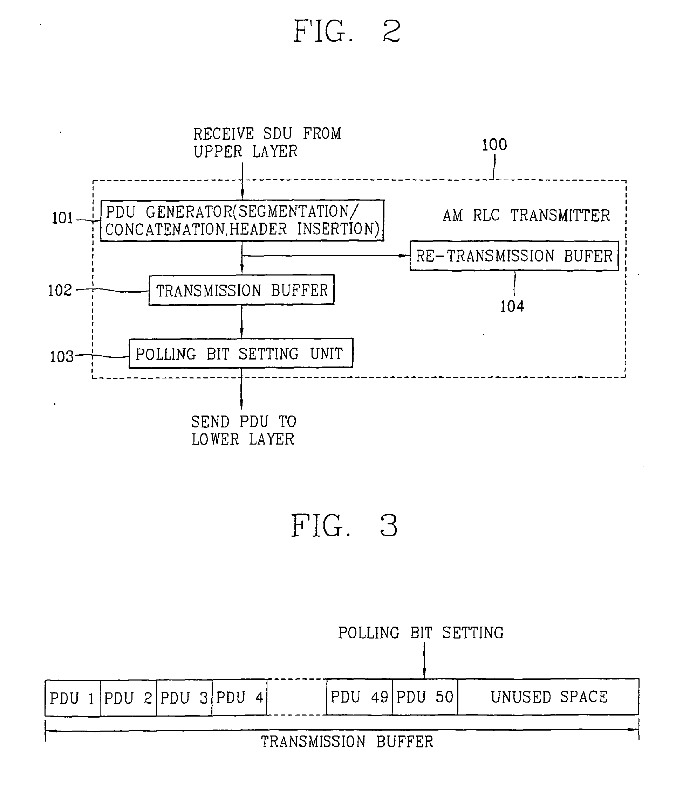

Figure 2 shows a structure of an AM RLC transmitter 100 which transmits PDUs to a receiver. As shown, when a PDU generator 101 receives an SDU from an upper layer, the PDU generator segments or concatenates the SDU in order to make the SDU a uniform size of a PDU. A PDU may be generated by adding an RLC header to each segment, and a sequence number may be included in the header. The PDU may be classified based on its sequence number.

PDUs generated in this way are stored in both a transmission buffer 102 and a re-transmission buffer 104. The transmitter AM RLC sends the PDUs stored in transmission buffer 102 to a lower layer based on a number requested by the lower layer every transmission time interval (TTI). At this time, a polling bit setting unit 103 determines whether to set a polling bit requesting the receiver to send status information for a specific PDU among the transmitted PDUs. In which PDU the polling bit is to be set varies according to a polling trigger.

The PDUs sent to the lower layer are transmitted to the receiver through a radio interface. In the receiver, an AM RLC forms SDUs using information in the headers of the PDUs, and SDUs are then delivered to the receiver upper layer.

When the polling bit is set in one PDU among the received PDUs, the receiver AM RLC checks whether the PDUs are correctly received and transmits status information to the transmitter AM RLC. The transmitter AM RLC deletes successfully transmitted PDUs from re-transmission buffer 104 based on positive status information. PDUs that are not successfully transmitted, as determined by negative status information, are sent to the transmission buffer and are re-transmitted. Only PDUs which receive a negative acknowledgment are re-transmitted. The re-transmitted PDUs are left in the re-transmission buffer until the transmission is determined to be successful. Re-transmitted PDUs may be given priority over first-transmitted PDUs, and it is possible to set a polling bit in the re-transmitted PDU.

In AM RLC, a transmission window and reception window are respectively used in the transmitter and receiver for transmitting and receiving PDUs. In general, the size of the transmission window is the same as the size of the reception window.

The transmission window has a size which corresponds to a predetermined maximum number of PDUs that can be transmitted. After PDUs within the range of the window are transmitted from a transmission buffer, subsequent PDUs are loaded into the buffer and transmitted within an updated transmission window. The transmission window may be updated based on status information from the receiver. Updating the transmission window may involve moving a lower limit (or position) of the window based on a previously transmitted PDU for which a negative acknowledgment has been received.

For example, consider the case where the limits of a transmission window extend from 1 to 100 (the size of the transmission window is 100 PDU positions) and PDUs corresponding to 1 through 50 are transmitted. When status information indicating that PDU Nos. 15, 20, and 40 were not successfully transmitted and the remaining PDUs were successfully transmitted is received from the receiver, the transmission window is updated (e.g., the lower and upper limits of the window are moved) to 15 through 114. The PDUs are then transmitted in the order of 15, 20, 40, 51, 52, and 53, i.e., the retransmitted PDUs are given priority over the first-transmitted PDUs.

The reception window in the receiver receives only PDUs that lie within a valid range. More specifically, the receiver receives only PDUs having transmission sequence numbers that lie within the limits of the reception window. PDUs received beyond the range of the reception window are discarded as soon as the PDUs are received. The reception window is updated only when a new in-sequence PDU is received in the reception window.

For example, consider the case where a reception window extends from 1 through 100 (the size of the reception window is 100 PDU positions), PDUs corresponding to 1 through 50 are received, but PDU Nos. 15, 20, and 40 PDUs are not successfully received. When this occurs, the reception window is updated so that its limits extend from 15 through114. The case where PDUs are not successfully received may correspond to the case where the PDUs are not transmitted or the PDUs are received with errors.

A Polling means the transmitter requests status information from the receiver. When the receiver receives a polling request from the transmitter, the receiver must check the reception state of PDUs received up to that point (e.g., at the point when a last PDU containing a polling bit was received). The receiver then sends information concerning this reception state to the transmitter. More specifically, for polling, the transmitter sets a polling bit in a PDU before transmission. When the PDU containing the polling bit is received, the receiver checks the state of a reception buffer with respect to this and previously received PDUs, and then informs the transmitter of information concerning whether each PDU up to that point was successfully received.

Because transmitting status information wastes radio resources, transmission of status information must be controlled by an appropriate method. That is, the transmitter must set the polling bit only for a PDU which satisfies a certain rule, without requesting the status information to every PDU. Such a rule is known as a polling trigger.

One method used to define the polling trigger is based on the last PDU stored in the transmission buffer. More specifically, in this method the polling bit is set when the last PDU in the transmission buffer is transmitted. Thus, as shown in Figure 3, in the case where PDUs corresponding to 1 through 50 are stored in the transmission buffer, when the PDU whose transmission sequence number is 50 is transmitted, the polling bit is set in the 50^{th} PDU.

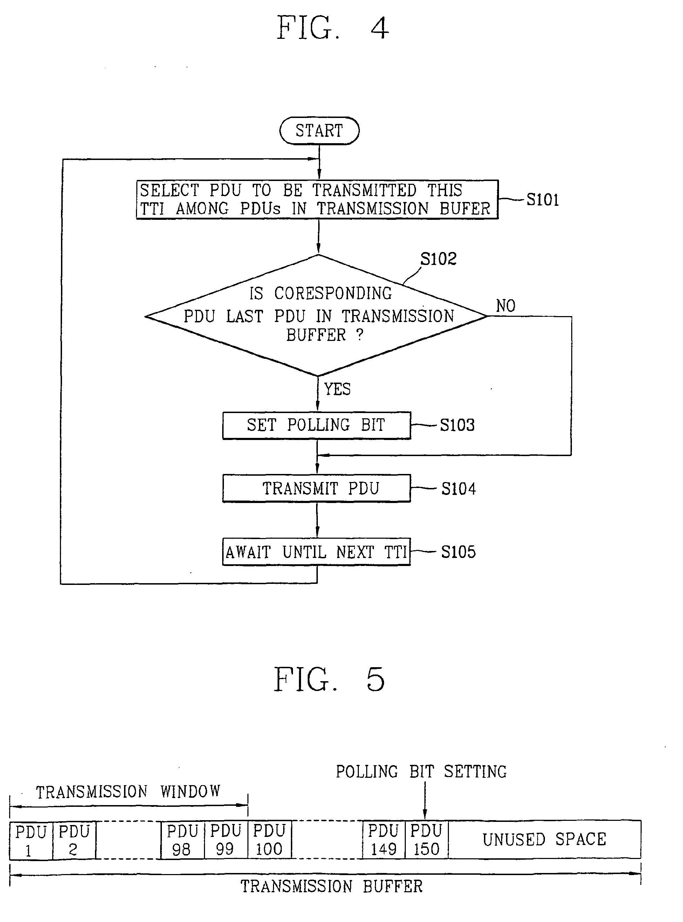

Figure 4 is a flowchart showing a related method for setting the polling bit using the last PDU in the transmission buffer. In this method, the PDUs in the transmission buffer are sequentially selected every TTI based on the number of PDUs requested by the lower layer (S101). In a next step, for each PDU selected, a check is performed to determine whether the selected PDU is the last PDU in the transmission buffer (S102). When it is determined that the selected PDU is the last PDU in the transmission buffer, the polling bit is set in the selected PDU (S103) and the PDU is transmitted to the receiver (S104). When it is determined that the corresponding PDU is not the last PDU in the transmission buffer, the selected PDU is transmitted without a polling bit (S104). The method then waits until the next TTI (S105) and the above process is repeated.

The related method has at least one drawback that impairs the performance of communications between the transmitter and receiver. Specifically, because the transmission window is not considered in the conventional method for setting the polling bit, the transmitter and receiver AM RLCs may experience deadlocked condition.

This deadlock condition arises, for example, when a number of PDUs beyond the range of the transmission window are stored in the transmission buffer. When this condition exists, the PDUs exceeding the range of the transmission window cannot be transmitted until the transmission window is updated to a point where these PDUs lie within the transmission window range. However, because the last PDU in the transmission window does not correspond to the last PDU in the transmission buffer, the last PDU in the transmission window will not be transmitted with a polling bit. As a result, even if the receiver successfully receives the last PDU, it will not send status information back to the transmitter. Accordingly, the transmission window will not be updated, no additional PDUs will be transmitted, and thus the transmitter and receiver are placed in a deadlocked state.

Figure 5 illustrates this deadlocked condition. As shown, when the transmission window has a size which corresponds to PDUs 1 through 100 (the size of the transmission window is 100 PDU positions) and PDUs 1 through 150 are received from the upper layer of the transmitter and stored in the transmission buffer, the transmitter and receiver will be deadlocked. This is because the polling bit is set when the last-stored PDU in the buffer (i.e., PDU No. 150) is transmitted, when the related method of polling is used. Under these circumstances, because the size of the transmission window is only 100 PDU positions, the transmitter can only transmit PDU 1 through 100. As a result, all PDUs within the range of the transmission window are transmitted without the polling bit.

On the receiver side, the receiver does not send status information to the transmitter because no PDU has been received in which the polling bit is set among the received PDUs. Because no status information has been sent back from the receiver, the transmission window will not be updated and thus the remaining PDUs in the buffer (e.g., PDUs 101 - 150) will not be transmitted. The transmitter and receiver are therefore deadlocked. During this condition, transmission is not performed even through the network has the ability to transmit the PDUs. Accordingly, network resources are used ineffectively and an unnecessary delay state is caused.

A need therefore exists for an improved method of increasing the efficiency and quality of voice and data transmissions in a mobile communications system, and more specifically one which achieves these advantages by preventing a deadlock condition from arising between a system transmitter and receiver. WO 01/37473 A1 is concerned with a mobile telecommunications system in which a poll timer is started/restarted and canceled in accordance with certain rules, and discloses a method for transmitting signals wherein a data segment or unit is selected from a buffer. Then it is determined whether the data unit occupies a predetermined position within the transmission window and polling information is transmitted with the data segment if the data unit is determined to occupy the predetermined position within the transmission window.

EP 0 695 053 A2 discloses an asymmetric protocol for wireless communications with error recovery between an end-user device and a base station. The end-user device receives from the base station unsolicited messages indicative of the status of data units received by the base station. The end-user device transmits acknowledgment and request for re-transmission messages only upon request, or when all the data units within a block of such units have been received.

### SUMMARY OF THE INVENTION

It is an object of the present invention to provide a method of the initially named kind that improves the speed, efficiency and quality of communications in a mobile communications system and that ensures that a deadlock condition will not arise between a transmitter and receiver of the mobile communications system. Another object of the present invention is to provide a terminal for use in a communications system suitable to perform such a method and a method for manufacturing a transmitter for use in a communications system.

With regard to the method for transmitting signals this object is achieved by the subject matter of anyone of the claims 1 and 9.

A terminal according to the present invention is claimed in claim 21 whereas a method for manufacturing a transmitter for use in a communications system according to the present invention is described in claim 28.

Refinements of the present invention are described in the respective dependent claims.

The present invention represents a significant improvement over conventional methods at least in part because of the polling triggers used in its various embodiments. Through these polling triggers, the present invention avoids transmission delays generated by conventional polling triggers. This results in a substantial increase in speed, efficiency, and quality of communications. This improved performance further allows user terminals to meet or exceed the standards required by next-generation mobile communications systems including so-called 3GPP wireless systems.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Figure 1 is a diagram showing the structure of a radio interface protocol used between a terminal operating based on a 3GPP RAN specification and a UTRAN.

Figure 2 is a diagram showing a structure of a radio link control layer of a transmitter operating in acknowledged mode.

Figure 3 is a diagram showing an example of polling trigger which is based on a last PDU in a transmission buffer.

Figure 4 is a flow diagram showing steps included in a related method for setting polling information in a transmitter.

Figure 5 is a diagram showing a deadlocked condition which can arise when the related method for setting polling information is used.

Figure 6 is a diagram showing a transmitter configured in accordance with one embodiment of the present invention.

Figure 7 is a flow diagram showing steps included in one embodiment of the method of the present invention.

Figure 8 is a flow diagram showing steps included in a second embodiment of the method of the present invention.

Figure 9 is a diagram showing the setting of a polling bit in a selected PDU when the PDU corresponds to a last PDU in a transmission buffer.

Figure 10 is a diagram showing the setting of a polling bit in a selected PDU when the PDU is a last PDU in a transmission window.

Figure 11 is a flow diagram showing steps included in a third embodiment of the method of the present invention.

### DETAILED DESCRIPTION OF PREFERRED EMBODIMENTS

The present invention is a system and method for preventing a deadlock condition from occurring in a communications system. The invention is preferably implemented in a mobile communications system such as the Universal Mobile Telecommunications System (UMTS) currently being developed by the third-generation partnership project (3GPP). Those skilled in the art can appreciate, however, that the invention may alternatively be adapted for use in communications systems which operate according to other standards. The present invention is also a transmitter which implements the method of the present invention for preventing a deadlock condition from occurring. The present invention is also a computer program which may be stored in a transmitter for implementing the method of the present invention. A detailed discussion of embodiments of the invention will now be provided.

The invention is ideally suited for use in a specific layer of a communications protocol which is adapted for operation within a UMTS Terrestrial Radio Access Network (UTRAN). The layer may be a data link layer of the protocol, and when implemented in this manner may correspond to at least the radio link control (RLC) layer. Lower layers of this protocol are generally shown in Figure 1, a detailed discussion of which has been previously provided. Preferably, the invention is applied within an RLC layer operating in the acknowledged mode (AM). Those skilled in the art can appreciate, however, that the invention may also be applied in other contexts. For example, the radio link protocol (RLP) layer of a radio communication system in accordance with the present invention may be adapted to operate according to a CDMA 2000 standard.

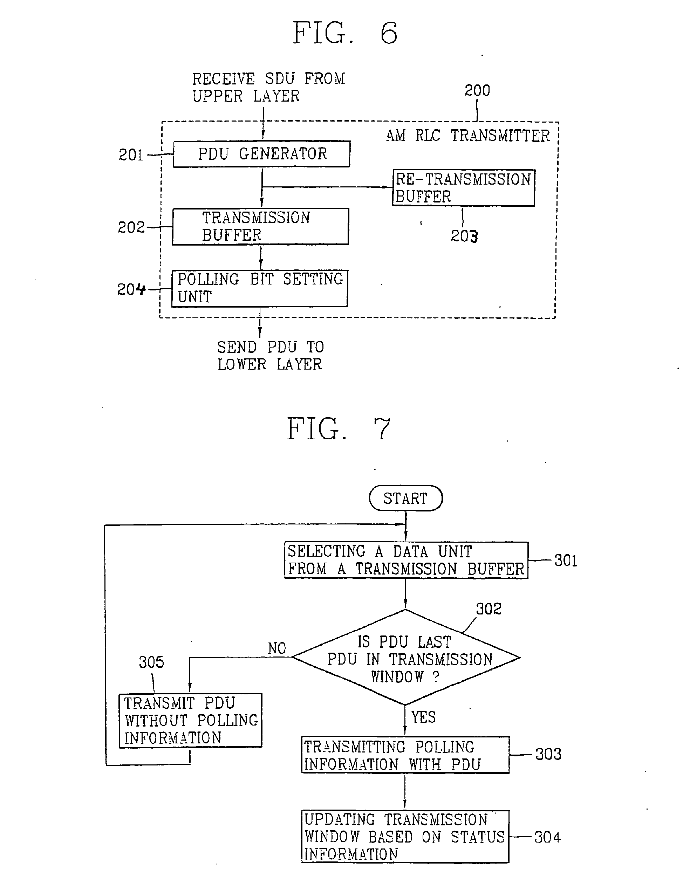

Figure 6 is a diagram showing a transmitter 200 in accordance with one embodiment of the present invention which transmits protocol data units using an RLC layer preferably operating in AM mode. The transmitter includes a PDU generator 201, a transmission buffer 202, a re-transmission buffer 203, and a polling bit setting unit 204. The transmitter may be included in any one of a variety of forms of user equipment, including but not limited to a mobile telephone, a personal digital assistant, a so-called pocket PC, a laptop or notebook computer, or any other device which receives signals wirelessly transmitted over a mobile communications network.

The PDU generator receives data units (e.g., SDUs) from an upper protocol layer and then segments or concatenates these SDUs in order form PDUs of a uniform size. The PDUs may be formed by adding an RLC header to each segment. A sequence number is preferably included in the header for the purpose of classifying or otherwise identifying the PDU. The sequence number may be a transmission sequence number for allowing a receiver to perform in-sequence processing of PDUs sent from the transmitter.

The transmission buffer stores the PDUs output from generator 201. These PDUs are sequentially delivered to a lower protocol layer based on a sequence number requested by the lower layer every transmission time interval (TTI). The lower layer then transmits the PDUs to a receiver through a radio interface. In the receiver, an AM RLC layer forms SDUs from the received PDUs based on information in the PDU headers. The resulting SDUs are then delivered to an upper protocol layer of the receiver for further processing.

The re-transmission buffer also stores the PDUs output from generator 201. Unlike the transmission buffer, however, the purpose of the re-transmission buffer is to enable a transmitted PDU to be re-transmitted in the event it was not successfully received by the receiver.

The re-transmission buffer operates in accordance with status information from the receiver. More specifically, when polling information is set in a received PDU, the receiver AM RLC checks whether this and preceding PDUs have been correctly received. The preceding PDUs may be checked back to the last PDU that was received containing polling information. At the conclusion of this check, the receiver transmits status information to the transmitter indicating the PDUs that were and were not successfully received.

The transmitter AM RLC deletes PDUs from the re-transmission buffer indicated to have been successfully received by the status information. PDUs that were not successfully received are output from the re-transmission buffer and re-transmitted. A negative acknowledgment (NACK) signal may be included in the status information for indicating that a PDU was not successfully received. Re-transmitted PDUs may be left in the re-transmission buffer until the transmission is successful, or alternatively until the PDU has been re-transmitted a predetermined number of times. When either of these events occurs, the PDU may be deleted from the re-transmission buffer. Re-transmitted PDUs may be given priority over first-transmitted PDUs if desired.

Polling bit setting unit 204 determines whether to send polling information with a protocol data unit output from the transmission buffer. The polling bit setting unit performs this function based on whether the protocol data unit is a last data unit in a transmission buffer, a last data unit in a transmission window, or both. As previously discussed, if polling information is included with a PDU, upon detection the receiver will send back status information to the transmitter AM RLC indicating whether this and preceding PDUs were successfully received. The polling information may be in the form of one or more bits set in a dedicated field of a PDU header. If desired, polling information may be included with re-transmitted PDUs.

The status information sent by the receiver back to the transmitter in response to polling information controls the movement of a transmission window used to transmit PDUs to the receiver. The transmission window has a size which preferably corresponds to a predetermined maximum number of PDUs that can be transmitted. A least a lower limit (or position) of this window may be set (or updated) based on the status information from the receiver. The transmission window is moved based on status information indicating that PDUs have been successfully received. Movement of the window may be stopped, however, when status information is received indicating that a PDU has not been successfully received. When this occurs, this PDU may be re-transmitted (with or without polling information) until subsequent status information indicates that the re-transmitted PDU has been successfully received. The transmission window may then be moved so that additional PDUs to enable additional PDUs from the transmission buffer to be loaded. An example of the manner in which transmission window movement is updated and how a reception window in the receiver moves was previously described.

Figure 7 shows steps included in one embodiment of the method of the present invention. The method is preferably implemented by the AM RLC transmitter such as shown in Figure 6, and according to at least one aspect addresses the manner in which polling information is assigned to PDUs output from the transmission and for re-transmission buffers. More specifically, the present invention advantageously controls the transmission of polling information with PDUs based on a polling trigger which allows the invention to outperform conventional methods in terms of speed, efficiency, and accuracy of communications.

An initial step of the method includes selecting a protocol data unit from a plurality of PDUs stored in the transmission buffer. (Block 301). As previously described, this buffer may be loaded based on PDUs output from generator 201. These PDUs are preferably stored in order of a predetermined transmission sequence and consequently may have consecutive transmission sequence numbers. Selection of data units is preferably performed within corresponding transmission time intervals.

A second step of the method includes determining whether the selected protocol data unit is a last data unit in a transmission window. (Block 302). The transmission window used by the AM RLC of the transmitter has a predetermined size for holding a maximum number of PDUs. For example, the transmission window may have a range of 100 PDUs positions. In this case, the PDU corresponding to the 100^{th} position of the window corresponds to the last data unit of the window. The last PDU in the transmission window constitutes the polling trigger for this embodiment of the present invention. As will be discussed in greater detail, setting the polling trigger to this PDU represents a significant improvement in the art because it allows the invention to avoid a deadlock condition caused by conventional polling techniques.

A third step of the method includes transmitting the selected PDU based on the outcome of the second step. If the selected PDU corresponds to the last PDU in the transmission window, the AM RLC of the transmitter delivers polling information with the PDU to a lower protocol layer of the transmitter. The PDU may then be transmitted with the polling information to the receiver. (Block 303). The polling information may be in the form of one or more polling bits which are preferably stored in a dedicated field of a header of the PDU. Alternatively, the polling information may be appended to or otherwise transmitted with the PDU to the receiver.

Once the receiver receives the polling information, status information is sent back to the transmitter. This status information preferably indicates whether the PDU transmitted with the polling information was successfully received by the receiver, and whether preceding PDUs back to the last PDU transmitted with polling information were successfully received. The transmission window may then be updated based on the status information sent from the receiver. (Block 304). This may include moving the position of the transmission window so that the lower limit (position) of the window corresponds to a PDU that was unsuccessfully received. At this point, the unsuccessfully received PDUs may be output from the re-transmission buffer and re-transmitted. The re-transmitted PDUs may be given priority in the transmission window.

If the selected PDU does not correspond to the last PDU in the transmission window, the AM RLC of the transmitter may deliver the PDU to a lower protocol layer without polling information. (Block 305). The PDU may then be transmitted to the receiver. The method may then continue by selecting the next in-sequence PDU within the range of the transmission window.

Setting the polling trigger of an AM RLC transmitter to the last PDU of a transmission window allows the invention to prevent a deadlock condition from occurring between the transmitter and receiver. This may be understood first with reference to the manner in which conventional systems operate.

Related systems use a polling trigger which is based on the last PDU stored in the transmission buffer, as previously discussed. When the number of PDUs stored in the transmission buffer is greater than the size of the transmission window, the last PDU position in the transmission window may not correspond to the last PDU stored in the transmission buffer. The last PDU in the transmission window will therefore be transmitted without polling information. This will stagnate movement of the transmission window in the transmitter and ultimately the reception window in the receiver, thereby placing the transmitter and receiver in a deadlocked condition. This may be understood with reference to the following example.

Consider the case where the size of the transmission window is 100 PDU positions and PDU Nos. 1 through 150 are stored in the transmission buffer. When the last PDU in the transmission window (e.g., PDU No. 100) is selected, a check will be performed to determine whether the polling condition is satisfied. In conventional systems, polling is triggered when the selected PDU corresponds to the last PDU stored in the transmission buffer. Since the PDU No. 100 does not correspond to the last PDU stored in the transmission buffer (e.g., PDU No. 150), polling information will not be set in PDU No. 100 when it is transmitted to the receiver.

Because polling information is not transmitted with PDU No. 100, the receiver will not send status information back to the transmitter, since the receiver will only perform this function when polling information is included with a received PDU. Consequently, the transmitter will not receive status information in response to transmission of PDU No. 100. As previously discussed, the transmission window is updated (i.e., moves) in response to positive status information, i.e., information indicating that previously transmitted PDUs have been successfully received. Under these conditions, it is clear that even though the PDU may have been successfully received, the transmission window will not be updated because no status information is sent back from the transmitter. As a result, the transmission window will not move to transmit the remaining fifty PDUs in the transmission buffer, which means that the receiver will no longer receive any additional PDUs. Thus, for all practical purposes, the transmitter and receiver are placed in an inoperative state, which has come to be known as deadlock.

The present invention operates using a polling trigger that advantageously makes deadlock impossible. The polling trigger used in accordance with the first embodiment of the invention is the last PDU in the transmission window. When a polling trigger of this type is used, the invention will ensure that status information is sent back from the receiver regardless of whether the number of PDUs stored in the transmission buffer is greater than the size of the transmission window. To illustrate, in the above example, when PDU No. 100 is selected for transmission from the transmission buffer, a check performed by the polling bit setting unit 204 determines that it is the last PDU in the transmission window. As a result, the polling bit setting unit transmits polling information with PDU No. 100.

The receiver detects the polling information and sends back status information indicating the state of reception of PDU No. 100 and all preceding PDUs back to the last PDU that was received with polling information. The transmission window is updated based on the status information, and as a result the remaining fifty PDUs (i.e., PDU Nos. 101-150) may be transmitted from the buffer to the receiver. Also, since the transmitter continues to transmit, the receiver remains operative. As a result, the deadlock condition is completely avoided. In this example, polling information may also be transmitted with the last PDU with the transmission buffer, which in this case is PDU No. 150.

The method of the present invention may include at least one optional step. This optional step includes determining whether the selected data unit has been previously transmitted. This step may be performed based on status information sent back from the receiver. For example, consider the case where PDU Nos. 1 through 100 were transmitted using a transmission window with 100 positions, and that the last PDU was transmitted with polling information. Consider further that status information sent back from the receiver indicates that PDU Nos. 50, 72, and 80 were not successfully received. In this case, the first three positions may be dedicated to re-transmitting PDU Nos 50, 72, and 80 and the transmission window may be updated so that the first 50 PDUs to be transmitted corresponds to new PDU Nos. 101 - 149 for the first time. Given this set of circumstances, the method may further include detecting that PDU Nos. 50, 72, and 80 need to be re-transmitted and then further detecting that PDU No. 80 is the last PDU among the re-transmitted PDUs in the transmission window. When this occurs, a polling request may be set in PDU No. 80 and this PDU may then be re-transmitted to the receiver. And the polling information may also be transmitted with the last PDU in the transmission window, in this case PDU No. 149, only if the PDU is determined to be the last data unit in the transmission window and the PDU has not been previously transmitted.

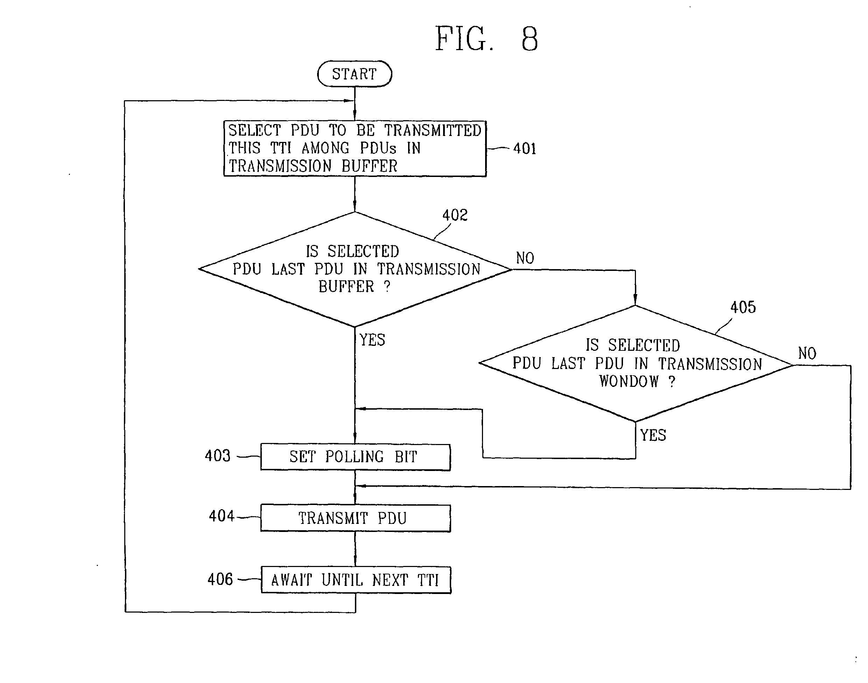

Figure 8 shows steps included in a second embodiment of the method of the present invention. This second embodiment is similar to the first embodiment except that it is performed based on one of two polling triggers, the first being that a selected PDU is the last PDU in a transmission window and the second being that the selected PDU is the last PDU in a transmission buffer. This method may be performed as follows.

In an initial step, a PDU is selected from the transmission buffer during a transmission time interval. (Block 401). A check is then performed to determine whether the selected PDU corresponds to the last PDU in the transmission buffer. (Block 402). If the selected PDU is the last PDU in the transmission buffer, a polling bit is set in the selected PDU (Block 403) and the PDU is then transmitted to the receiver (Block 404). If the selected PDU is not the last PDU in the transmission buffer, a second check is performed to determine whether it is the last PDU in the transmission window. (Block 405). If the selected PDU is the last PDU in the transmission window, the polling bit is set and the PDU is transmitted to the receiver. If the selected PDU is not the last PDU in the transmission buffer or the transmission window, the PDU is transmitted to the receiver without polling information. The method then waits for the next transmission time interval (Block 406) and another PDU is selected. If desired, one or more of the PDUs may be selected from the re-transmission buffer. Polling information may be transmitted with this PDU if one of the trigger conditions is satisfied.

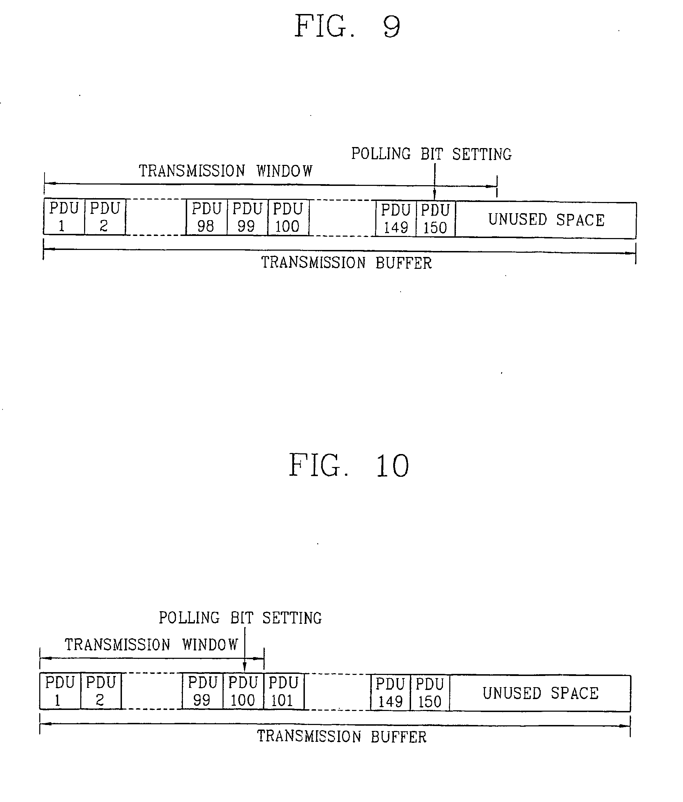

Figure 9 is a diagram showing the setting of a polling bit in a selected PDU (e.g., PDU No. 150) when this PDU corresponds to the last PDU in the transmission buffer. More specifically, this diagram shows the case where the transmission window includes 160 positions and PDU Nos. 1 through 150 are stored in the transmission buffer. Because the number of PDUs stored in the transmission buffer is less than the number of positions of the transmission window, the polling bit is set for PDU No. 150, which is the last PDU in the transmission buffer.

Figure 10 is a diagram showing the setting of a polling bit in a selected PDU (e.g., PDU No. 100) when the PDU is the last PDU in a transmission window. More specifically, this diagram shows the case where the transmission window includes 100 positions and PDU Nos. 1 through 150 are stored in the transmission buffer, i.e., the number of positions of the transmission window is less than the number of PDUs stored in the transmission buffer. Under these circumstances, and in accordance with the present invention, PDU No. 100 is set with a polling bit even though it is not the last PDU stored in the transmission buffer.

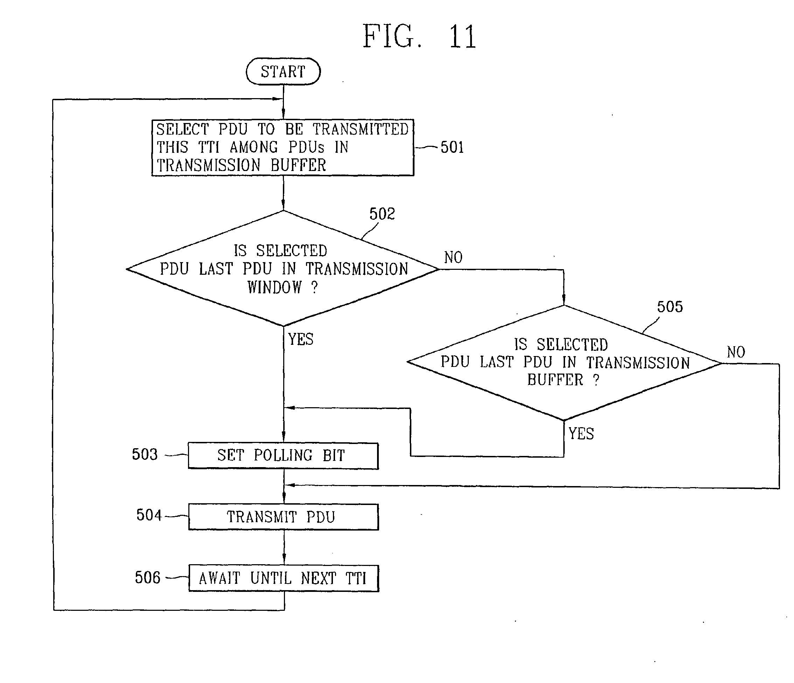

Figure 11 shows steps included in a third embodiment of the method of the present invention. The third embodiment is similar to the second embodiment except that a check to determine whether a selected PDU is the last PDU in a transmission window (Block 502) is performed before a check to determine whether the selected PDU is a last PDU in a transmission buffer (Block 505)

The steps according to blocks 501, 503, 504 and 506 correspond in this order to the steps of the second embodiment according to blocks 401, 403, 404 and 406 in Figure 8.

The present invention is also a computer program which includes sections of code for performing steps included in the various embodiment of the method of the present invention. The computer program may be written in any computer language and may be stored on a permanent or removable computer-readable medium within or interfaced to a user terminal in which the transmission buffer is located. Permanent computer-readable mediums include but are not limited to read-only memories and random-access memories. Removable mediums include but are not limited to EPROMs, EEPROMs, any one of a number of so-called memory sticks or cards, smart cards, computer cards, or any other type of removable storage medium. Flash memories may also be used to store the computer program of the present invention.

In all the embodiments of the method of the present invention, the polling setting unit of the user terminal shown in Figure 6 may perform steps of determining whether a selected PDU is a last PDU in the buffers or transmission window, as well as other processing steps.

Also, the method of the present invention has been described as controlling the setting of a polling bit in accordance with a transmission window having a predetermined size. This size may correspond to a predetermined maximum size of the window, or the window may be set to some limit less than the maximum size if desired.

Also, in many of the embodiments of the invention the polling trigger is based on the last PDU in the transmission window. Those skilled in the art can appreciate that, if desired, the polling trigger may be set to a PDU which does not correspond to the last PDU in the transmission window. For example, it may be desired to allocate one or more positions in the window to a special type of PDU, such as re-transmitted PDUs. Under these circumstances, the polling trigger may be set to correspond to the last first-transmitted PDU in the transmission window or the last re-transmitted PDU in the transmission window. The polling trigger may be set by an upper protocol layer, and may be dynamically changed throughout operation of the transmitter based on control information from an upper layer, or may be based on pre-stored information in the transmitter.

It is noted that the present invention has been adopted in 3GPP Technical Specification TS 25.322 v4.3.0 (2001-12) covering "Technical Specification Group Radio Access Network; RLC Protocol Specification." This document is incorporated herein by reference.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method for transmitting signals in a communications system, comprising:
- selecting (301, 501) a data unit from a buffer (202);
**characterized in that** the method further comprises the steps:
- determining (302, 502) whether the data unit is a last data unit in a transmission window;
- determining whether the data unit has been previously transmitted; and
- transmitting (303; 503, 504) polling information with the data unit if the data unit is determined to be the last data unit in the transmission window and the data unit has not been previously transmitted.

2. The method of claim 1, wherein the buffer is a transmission buffer (202).

3. The method of claim 2, wherein if the data unit is not the last data unit within the transmission window, the method further comprising:
- determining (505) whether the data unit is a last data unit in the transmission buffer (202); and
- transmitting (503, 504) polling information with the data unit if the data unit is determined to be the last data unit in the transmission buffer and the data unit has not been previously transmitted.

4. The method of claim 3, wherein if the data unit is not the last data unit in the transmission buffer, the method further comprising:
- transmitting (504) the data unit without the polling information.

5. The method of claim 1, further comprising:
- receiving the data unit from a third protocol layer; and
- storing the data unit in the buffer (202, 203).

6. The method of claim 5, wherein the determining steps are performed in a second protocol layer which is a lower layer than the third protocol layer.

7. The method of claim 1, wherein at least one of the determining step is performed in a radio link control RLC protocol layer of one a transmitter (200) and a network apparatus.

8. The method of claim 1, further comprising:
- setting (503) the polling information in a predetermined field of the data unit.

9. A method for transmitting signals in a communications system, comprising:
- selecting a data unit from a buffer;
- determining whether the data unit occupies a predetermined position within a transmission window;
**characterized in that** the method further comprises the steps:
- determining whether the data unit has been previously transmitted; and
- transmitting polling information with the data unit if the data unit is determined to occupy said predetermined position within the transmission window and the data unit has not been previously transmitted.

10. The method of claim 9, wherein occupying the predetermined position means the data unit is the last data unit of the transmission window.

11. The method of claim 9, wherein said determining steps are performed in an RLC protocol layer operating in acknowledge mode AM.

12. The method of claim 9, wherein if the data unit does not occupy said predetermined position, the method further comprising:
- determining whether the data unit is a last data unit in the buffer; and
- transmitting the polling information with the data unit if the data unit is determined to be the last data unit in the buffer and the data unit has not been previously transmitted.

13. The method of claim 9, wherein the buffer is a transmission buffer.

14. The method of claim 13, further comprising:
(a) checking whether a selected protocol data unit is a last protocol data unit in the transmission buffer (505);
(b) checking (502) whether the selected protocol data unit is a last protocol data unit in a transmission window; and
(c) setting (503) at least one polling bit in the selected protocol data unit and transmitting (504) the selected protocol data unit to the receiver, when it is determined that the selected protocol data unit is at least one of the last protocol data unit in the transmission buffer and the last protocol data unit in the transmission window.

15. The method of claim 14, wherein step (b) (502) is performed after step (a) (505).

16. The method of claim 14, wherein step (a) (505) is performed after step (b) (502).

17. The method of claim 14, wherein the selected protocol data unit is a data unit defined by a radio link control RLC protocol layer.

18. The method of claim 17, wherein the radio link control RLC protocol layer is located in a mobile terminal of a mobile communications system.

19. The method of claim 17, wherein the radio link control RLC protocol layer is located in a network apparatus.

20. The method of claim 14, wherein steps (a) to (c) are repeated for each of the sequentially selected protocol data units every transmission time interval.

21. A terminal for use in a communications system, comprising:
- a buffer (202); and
- a polling information setting unit (204);
**characterized in that** the polling information setting unit (204) is adapted to
-- determine whether a data unit selected from the buffer (202) is a last data unit in a transmission window,
-- determine whether the data unit has been previously transmitted, and
-- transmit polling information with the data unit if the data unit is determined to be the last data unit in the transmission window and the data unit has not been previously transmitted.

22. The terminal of claim 21, wherein the buffer is a transmission buffer (202).

23. The terminal of claim 22, wherein if the data unit is not the last data unit in the transmission window, the polling information setting unit (204) is adapted to
-- determine whether the data unit is a last data unit in the transmission buffer (202); and
-- transmit polling information with the data unit if the data unit is determined to be the last data unit in the transmission buffer (202) and the data unit has not been previously transmitted.

24. The terminal of claim 23, wherein if the data unit is not the last data unit in the transmission buffer (202), the polling information setting unit is adapted to transmit the data unit without the polling information.

25. The terminal of claim 21, wherein the polling information setting unit (204) is adapted to operate in a radio link control RLC protocol layer.

26. The terminal of claim 25, wherein the radio link control RLC protocol layer is adapted to operate in acknowledge mode AM.

27. The terminal of claim 21, wherein the polling information setting unit (204) is adapted to set the polling information in a predetermined field of the data unit.

28. A method for manufacturing a transmitter for use in a communications system, comprising:
- providing a buffer (202); and
- providing a polling information setting unit (204) in communication with the buffer (202);
**characterized by** providing the polling information setting unit (204) with
-- means for determining whether a data unit selected from the buffer (202) is a last data unit in a transmission window,
-- means for determining whether the data unit has been previously transmitted, and
-- means for transmitting polling information with the data unit if the data unit is determined to be the last data unit in the transmission window and the data unit has not been previously transmitted.

29. A computer program stored within a computer-readable medium, comprising instructions when executed on a computer performing the method steps of:
- selecting a data unit from a buffer (202);
- determining whether the data unit is a last data unit in a transmission window the and whether the data unit has been previously transmitted; and
- transmitting polling information with the data unit if the data unit is determined to be the last data unit in the transmission window and the data unit has not been previously transmitted.

30. The computer program of claim 29 stored within a computer-readable medium, comprising instructions when executed on a computer performing the method steps of:
- determining whether the data unit is a last data unit in the buffer (202), if the data unit is not the last data unit in the transmission window; and
- transmittng the polling information with the data unit if the data unit is determined to be the last data unit in the transmission buffer (202) and the data unit has not been previously transmitted.

31. The computer program of claim 30 stored within a computer-readable medium, comprising instructions when executed on a computer performing the method steps of:
- transmitting the data unit without the polling information, if the data unit is not the last data unit in the transmission buffer (202).

## Patentansprüche

1. Verfahren zum Senden von Signalen in einem Kommunikationssystem, das umfasst:
- Auswählen (301, 501) einer Dateneinheit aus einem Puffer (202);
**dadurch gekennzeichnet, dass** das Verfahren ferner die folgenden Schritte umfasst:
- Bestimmen (302, 502), ob die Dateneinheit eine letzte Dateneinheit in einem Sendefenster ist;
- Bestimmen, ob die Dateneinheit früher gesendet worden ist; und
- Senden (303; 503, 504) von Abfrageinformationen zusammen mit der Dateneinheit, falls bestimmt wird, dass die Dateneinheit die letzte Dateneinheit in dem Sendefenster ist und die Dateneinheit nicht früher gesendet worden ist.

2. Verfahren nach Anspruch 1, bei dem der Puffer ein Sendepuffer (202) ist.

3. Verfahren nach Anspruch 2, wobei das Verfahren dann, wenn die Dateneinheit nicht die letzte Dateneinheit in dem Sendefenster ist, ferner umfasst:
- Bestimmen (505), ob die Dateneinheit eine letzte Dateneinheit in dem Sendepuffer (202) ist; und
- Senden (503, 504) von Abfrageinformationen zusammen mit der Dateneinheit, falls bestimmt wird, dass die Dateneinheit die letzte Dateneinheit in dem Sendepuffer ist und die Dateneinheit nicht früher gesendet worden ist.

4. Verfahren nach Anspruch 3, wobei das Verfahren dann, wenn die Dateneinheit nicht die letzte Dateneinheit in dem Sendepuffer ist, ferner umfasst:
- Senden (504) der Dateneinheit ohne die Abfrageinformationen.

5. Verfahren nach Anspruch 1, das ferner umfasst:
- Empfangen der Dateneinheit von einer dritten Protokollschicht; und
- Speichern der Dateneinheit in dem Puffer (202, 203).

6. Verfahren nach Anspruch 5, bei dem die Bestimmungsschritte in einer zweiten Protokollschicht ausgeführt werden, die eine niedrigere Schicht als die dritte Protokollschicht ist.

7. Verfahren nach Anspruch 1, bei dem wenigstens einer der Bestimmungsschritte in einer Funkverbindungssteuerungs- oder RLC-Protokollschicht entweder eines Senders (200) oder einer Netzvorrichtung ausgeführt wird.

8. Verfahren nach Anspruch 1, das ferner umfasst:
- Setzen (503) der Abfrageinformationen in einem vorgegebenen Feld der Dateneinheit.

9. Verfahren zum Senden von Signalen in einem Kommunikationssystem, das umfasst:
- Auswählen einer Dateneinheit aus einem Puffer;
- Bestimmen, ob die Dateneinheit eine vorgegebene Position in einem Sendefenster einnimmt;
**dadurch gekennzeichnet, dass** das Verfahren ferner die folgenden Schritte umfasst:
- Bestimmen, ob die Dateneinheit früher gesendet worden ist; und
- Senden von Abfrageinformationen zusammen mit der Dateneinheit, falls bestimmt wird, dass die Dateneinheit die vorgegebene Position in dem Sendefenster einnimmt und die Dateneinheit nicht früher gesendet worden ist.

10. Verfahren nach Anspruch 9, bei dem das Einnehmen der vorgegebenen Position bedeutet, dass die Dateneinheit die letzte Dateneinheit des Sendefensters ist.

11. Verfahren nach Anspruch 9, bei dem die Bestimmungsschritte in einer RLC-Protokollschicht, die in einer Quittierungsbetriebsart AM arbeitet, ausgeführt werden.

12. Verfahren nach Anspruch 9, wobei das Verfahren dann, wenn die Dateneinheit die vorgegeben Position nicht einnimmt, ferner umfasst:
- Bestimmen, ob die Dateneinheit eine letzte Dateneinheit in dem Puffer ist; und
- Senden der Abfrageinformationen mit der Dateneinheit, falls bestimmt wird, dass die Dateneinheit die letzte Dateneinheit in dem Puffer ist und die Dateneinheit nicht früher gesendet worden ist.

13. Verfahren nach Anspruch 9, bei dem der Puffer ein Sendepuffer ist.

14. Verfahren nach Anspruch 13, das ferner umfasst:
(a) Prüfen, ob eine ausgewählte Protokolldateneinheit eine letzte Protokolldateneinheit in dem Sendepuffer (505) ist;
(b) Prüfen (502), ob die ausgewählte Protokolldateneinheit eine letzte Protokolldateneinheit in einem Sendefenster ist; und
(c) Setzen (503) wenigstens eines Abfragebits in der ausgewählten Protokolldateneinheit und Senden (504) der ausgewählten Protokolldateneinheit zu dem Empfänger, wenn bestimmt wird, dass die ausgewählte Protokolldateneinheit die letzte Protokolldateneinheit in dem Sendepuffer und/oder die letzte Protokolldateneinheit in dem Sendefenster ist.

15. Verfahren nach Anspruch 14, bei dem der Schritt (b) (502) nach dem Schritt (a) (505) ausgeführt wird.

16. Verfahren nach Anspruch 14, bei dem der Schritt (a) (505) nach dem Schritt (b) (502) ausgeführt wird.

17. Verfahren nach Anspruch 14, bei dem die ausgewählte Protokolldateneinheit eine Dateneinheit ist, die durch eine Funkverbindungssteuerungs- oder RLC-Protokollschicht definiert ist.

18. Verfahren nach Anspruch 17, bei dem sich die Funkverbindungssteuerungs- oder RLC-Protokollschicht in einem mobilen Endgerät eines Mobilkommunikationssystems befindet.

19. Verfahren nach Anspruch 17, bei dem sich die Funkverbindungssteuerungs- oder RLC-Protokollschicht in einer Netzvorrichtung befindet.

20. Verfahren nach Anspruch 14, bei dem die Schritte (a) bis (c) für jede der nacheinander ausgewählten Protokolldateneinheiten in jedem Sendezeitintervall wiederholt werden.

21. Endgerät für die Verwendung in einem Kommunikationssystem, das umfasst:
- einen Puffer (202); und
- eine Abfrageinformations-Setzeinheit (204);
**dadurch gekennzeichnet, dass** die Abfrageinformation-Setzeinheit (204) so beschaffen ist, dass sie
-- bestimmt, ob eine aus dem Puffer (202) ausgewählte Dateneinheit eine letzte Dateneinheit in einem Sendefenster ist,
-- bestimmt, ob die Dateneinheit früher gesendet worden ist, und
-- Abfrageinformationen zusammen mit der Dateneinheit sendet, falls bestimmt wird, dass die Dateneinheit die letzte Dateneinheit in dem Sendefenster ist und die Dateneinheit nicht früher gesendet worden ist.

22. Endgerät nach Anspruch 21, bei dem der Puffer ein Sendepuffer (202) ist.

23. Endgerät nach Anspruch 22, bei dem dann, wenn die Dateneinheit nicht die letzte Dateneinheit in dem Sendefenster ist, die Abfrageinformation-Setzeinheit (204) so beschaffen ist, dass sie
-- bestimmt, ob die Dateneinheit eine letzte Dateneinheit in dem Sendepuffer (202) ist; und
-- Abfrageinformationen zusammen mit der Dateneinheit sendet, falls bestimmt wird, dass die Dateneinheit die letzte Dateneinheit in dem Sendepuffer (202) ist und die Dateneinheit nicht früher gesendet worden ist.

24. Endgerät nach Anspruch 23, bei dem dann, wenn die Dateneinheit nicht die letzte Dateneinheit in dem Sendepuffer (202) ist, die Abfrageinformation-Setzeinheit so beschaffen ist, dass sie die Dateneinheit ohne die Abfrageinformationen sendet.

25. Endgerät nach Anspruch 21, bei dem die Abfrageinformation-Setzeinheit (204) so beschaffen ist, dass sie in einer Funkverbindungssteuerungs- oder RLC-Protokollschicht arbeitet.

26. Endgerät nach Anspruch 25, bei dem die Funkverbindungssteuerungs- oder RLC-Protokollschicht so beschaffen ist, dass sie in einer Quittierungsbetriebsart AM arbeitet.

27. Endgerät nach Anspruch 21, bei dem die Abfrageinformation-Setzeinheit (204) so beschaffen ist, dass sie die Abfrageinformationen in einem vorgegebenen Feld der Dateneinheit setzt.

28. Verfahren zum Herstellen eines Senders für die Verwendung in einem Kommunikationssystem, das umfasst:
- Vorsehen eines Puffers (202); und
- Vorsehen einer Abfrageinformation-Setzeinheit (204), die mit dem Puffer (202) kommunizieren kann;
**gekennzeichnet durch** das Versehen der Abfrageinformation-Setzeinheit (204) mit
-- Mitteln zum Bestimmen, ob eine aus dem Puffer (202) ausgewählte Dateneinheit eine letzte Dateneinheit in einem Sendefenster ist,
-- Mitteln zum Bestimmen, ob die Dateneinheit früher gesendet worden ist, und
-- Mitteln zum Senden von Abfrageinformationen mit der Dateneinheit, falls bestimmt wird, dass die Dateneinheit die letzte Dateneinheit in dem Sendefenster ist und die Dateneinheit nicht früher gesendet worden ist.

29. Computerprogramm, das in einem computerlesbaren Medium gespeichert ist und Befehle enthält, die, wenn sie auf einem Computer ausgeführt werden, die folgenden Verfahrensschritte ausführen:
- Auswählen einer Dateneinheit aus einem Puffer (202);
- Bestimmen, ob die Dateneinheit eine letzte Dateneinheit in einem Sendefenster ist und ob die Dateneinheit früher gesendet worden ist; und
- Senden von Abfrageinformationen mit der Dateneinheit, falls bestimmt wird, dass die Dateneinheit die letzte Dateneinheit in dem Sendefenster ist und die Dateneinheit nicht früher gesendet worden ist.

30. Computerprogramm nach Anspruch 29, das in einem computerlesbaren Medium gespeichert ist und Befehle enthält, die, wenn sie auf einem Computer ausgeführt werden, die folgenden Verfahrensschritte ausführen:
- Bestimmen, ob die Dateneinheit eine letzte Dateneinheit in dem Puffer (202) ist, falls die Dateneinheit nicht die letzte Dateneinheit in dem Sendefenster ist; und
- Senden der Abfrageinformationen zusammen mit der Dateneinheit, falls bestimmt wird, dass die Dateneinheit die letzte Dateneinheit in dem Sendepuffer (202) ist und die Dateneinheit nicht früher gesendet worden ist.

31. Computerprogramm nach Anspruch 30, das in einem computerlesbaren Medium gespeichert ist und Befehle enthält, die, wenn sie auf einem Computer ausgeführt werden, den folgenden Verfahrensschritt ausführen:
- Senden der Dateneinheit ohne die Abfrageinformationen, falls die Dateneinheit nicht die letzte Dateneinheit in dem Sendepuffer (202) ist.

## Revendications

1. Procédé de transmission de signaux dans un système de communication, comprenant :
- la sélection (301, 501) d'une unité de données depuis une mémoire tampon (202) ;
**caractérisé en ce que** le procédé comprend en outre les étapes de :
- détermination (302, 502) du fait que l'unité de données est ou n'est pas une dernière unité dans une fenêtre de transmission ;
- détermination du fait que l'unité de données a ou n'a pas été préalablement transmise ; et
- transmission (303 ; 503, 504) d'informations d'interrogation avec l'unité de données si elle est déterminée comme étant la dernière unité dans la fenêtre de transmission et l'unité de données n'a pas été préalablement transmise.

2. Procédé selon la revendication 1, dans lequel la mémoire tampon est une mémoire tampon de transmission (202).

3. Procédé selon la revendication 2, dans lequel si l'unité de données n'est pas la dernière unité dans la fenêtre de transmission, le procédé comprend en outre :
- la détermination (505) si l'unité de données est ou n'est pas une dernière unité dans la mémoire tampon de transmission (202) ; et
- la transmission (503, 504) des informations d'interrogation avec l'unité de données si elle est déterminée comme étant la dernière unité dans la mémoire tampon de transmission et l'unité de données n'a pas été préalablement transmise.

4. Procédé selon la revendication 3, dans lequel si l'unité de données n'est pas la dernière unité dans la mémoire tampon de transmission, le procédé comprend en outre le fait de :
- transmettre (504) l'unité de données sans les informations d'interrogation.

5. Procédé selon la revendication 1, comprenant en outre :
- la réception de l'unité de données depuis une troisième couche de protocole ; et
- le stockage de l'unité de données dans la mémoire tampon (202, 203).

6. Procédé selon la revendication 5, dans lequel les étapes de détermination sont exécutées dans une deuxième couche de protocole qui est inférieure à la troisième couche de protocole.

7. Procédé selon la revendication 1, dans lequel au moins l'une des étapes de détermination est exécutée dans une couche de protocole RLC (Radio Link Control) de l'un parmi un émetteur (200) et un dispositif de réseau.

8. Procédé selon la revendication 1, comprenant en outre :
- la configuration (503) des informations d'interrogation dans un champ prédéterminé de l'unité de données.

9. Procédé de transmission de signaux dans un système de communication, comprenant :
- la sélection d'une unité de données depuis une mémoire tampon ;
- la détermination du fait que l'unité de données occupe ou n'occupe pas une position prédéterminée au sein d'une fenêtre de transmission ;
**caractérisé en ce que** le procédé comprend en outre les étapes de :
- détermination du fait que l'unité de données a ou n'a pas été préalablement transmise ; et
- transmission d'informations d'interrogation avec l'unité de données si elle est déterminée comme occupant ladite position prédéterminée au sein de la fenêtre de transmission et l'unité de données n'a pas été préalablement transmise.

10. Procédé selon la revendication 9, dans lequel l'occupation de la position prédéterminée signifie que l'unité de données est la dernière unité de la fenêtre de transmission.

11. Procédé selon la revendication 9, dans lequel lesdites étapes de détermination sont exécutées dans une couche de protocole RLC fonctionnant dans un mode d'acquittement AM.

12. Procédé selon la revendication 9, dans lequel si l'unité de données n'occupe pas ladite position prédéterminée, le procédé comprenant en outre :
- la détermination du fait que l'unité de données est ou n'est pas une dernière unité dans la mémoire tampon ; et
- la transmission des informations d'interrogation avec l'unité de données si elle est déterminée comme étant la dernière unité dans la mémoire tampon et l'unité n'a pas été préalablement transmise.

13. Procédé selon la revendication 9, dans lequel la mémoire tampon est une mémoire tampon de transmission.

14. Procédé selon la revendication 13, comprenant en outre :
(a) la vérification du fait qu'une unité de données de protocole sélectionnée est une dernière dans la mémoire tampon de transmission (505) ;
(b) la vérification (502) du fait que l'unité de données de protocole sélectionnée est une dernière unité dans une fenêtre de transmission ; et
(c) la configuration (503) au moins d'un bit d'interrogation dans l'unité de données de protocole sélectionnée et sa transmission (504) au récepteur, quand il est déterminé que l'unité de données de protocole sélectionnée est au moins l'une de la dernière unité de données de protocole dans la mémoire tampon de transmission et la dernière unité de données de protocole dans la fenêtre de transmission.

15. Procédé selon la revendication 14, dans lequel l'étape (b) (502) est exécutée après l'étape (a) (505).

16. Procédé selon la revendication 14, dans lequel l'étape (a) (505) est exécutée après l'étape (b) (502).

17. Procédé selon la revendication 14, dans lequel l'unité de données de protocole sélectionnée est une unité de données définie par une couche de protocole RLC (Radio Link Control).

18. Procédé selon la revendication 17, dans lequel la couche de protocole RLC (Radio Link Control) est située dans un terminal mobile d'un système de communication mobile.

19. Procédé selon la revendication 17, dans lequel la couche de protocole RLC (Radio Link Control) est située dans un dispositif de réseau.

20. Procédé selon la revendication 14, dans lequel les étapes (a) à (c) sont répétées pour chacune des unités de données de protocole sélectionnées de manière séquentielle à chaque intervalle de temps de transmission.

21. Terminal à utiliser dans un système de communication, comprenant :
- une mémoire tampon (202) ; et
- une unité de configuration d'informations d'interrogation (204) ;
**caractérisé en ce que** l'unité de configuration d'informations d'interrogation (204) est adaptée pour :
- déterminer si une unité de données sélectionnée à partir de la mémoire tampon (202) est une dernière unité de données dans une fenêtre de transmission,
- déterminer si l'unité de données a été préalablement transmise, et
- transmettre les informations d'interrogation avec l'unité de données si elle est déterminée comme étant la dernière unité de données dans la fenêtre de transmission et l'unité n'a pas été préalablement transmise.

22. Terminal selon la revendication 21, dans lequel la mémoire tampon est une mémoire tampon de transmission (202).

23. Terminal selon la revendication 22, dans lequel si l'unité de données n'est pas la dernière unité dans la fenêtre de transmission, l'unité de configuration d'informations d'interrogation (204) est adaptée pour :
- déterminer si l'unité de données est ou n'est pas une dernière unité de données dans la mémoire tampon de transmission (202) ; et
- transmettre des informations d'interrogation avec l'unité de données si elle est déterminée comme étant la dernière unité dans la mémoire tampon de transmission (202) et l'unité n'a pas été préalablement transmise.

24. Terminal selon la revendication 23, dans lequel si l'unité de données n'est pas la dernière unité dans la mémoire tampon de transmission (202), l'unité de configuration d'informations d'interrogation est adaptée pour transmettre l'unité de données sans les informations d'interrogation.

25. Terminal selon la revendication 21, dans lequel l'unité de configuration d'informations d'interrogation (204) est adaptée pour fonctionner dans une couche de protocole RLC (Radio Link Control).

26. Terminal selon la revendication 25, dans lequel la couche de protocole RLC (Radio Link Control) est adaptée pour fonctionner dans un mode d'acquittement AM.

27. Terminal selon la revendication 21, dans lequel l'unité de configuration d'informations d'interrogation (204) est adaptée pour configurer les informations d'interrogation dans un champ prédéterminé de l'unité de données.

28. Procédé de fabrication d'un émetteur à utiliser dans un système de communication, comprenant :
- la fourniture d'une mémoire tampon (202) ; et
- la fourniture d'une unité de configuration d'informations d'interrogation (204) en communication avec la mémoire tampon (202) ;
**caractérisé par** la fourniture à l'unité de configuration d'informations d'interrogation (204) de :
- un moyen pour déterminer si une unité de données sélectionnée à partir de la mémoire tampon (202) est ou n'est pas une dernière unité de données dans une fenêtre de transmission,
- un moyen pour déterminer si l'unité de données a ou n'a pas été préalablement transmise, et
- un moyen pour transmettre des informations d'interrogation avec l'unité de données si elle est déterminée comme étant la dernière unité de données dans la fenêtre de transmission et l'unité de données n'a pas été préalablement transmise.

29. Programme informatique stocké sur un support lisible par ordinateur, comprenant des instructions lorsqu'il est exécuté sur un ordinateur exécutant les étapes de :
- sélection d'une unité de données depuis une mémoire tampon (202) ;
- détermination du fait que l'unité de données est ou n'est pas une dernière unité dans une fenêtre de transmission et du fait que l'unité de données a ou n'a pas été préalablement transmise ; et
- transmission d'informations d'interrogation avec l'unité de données si elle est déterminée comme étant la dernière unité dans la fenêtre de transmission et l'unité de données n'a pas été préalablement transmise.

30. Programme informatique selon la revendication 29, stocké sur un support lisible par ordinateur, comprenant des instructions lorsqu'il est exécuté sur un ordinateur exécutant les étapes de :
- détermination du fait que l'unité de données est ou n'est pas une dernière unité dans la mémoire tampon (202), si l'unité de données n'est pas la dernière unité dans la fenêtre de transmission ; et
- transmission des informations d'interrogation avec l'unité de données si elle est déterminée comme étant la dernière unité de données dans la mémoire tampon de transmission (202) et l'unité de données n'a pas été préalablement transmise.

31. Programme informatique selon la revendication 30, stocké sur un support lisible par ordinateur, comprenant des instructions lorsqu'il est exécuté sur un ordinateur exécutant les étapes de :
- transmission de l'unité de données sans les informations d'interrogation, si elle n'est pas la dernière unité de données dans la mémoire tampon de transmission (202).
